# EUROPÄISCHE PATENTANMELDUNG

(11) **EP 2 172 681 A1**
(43) Veröffentlichungstag der Anmeldung: **07.04.2010**
(21) Anmeldenummer: 08017476.6
(22) Anmeldetag: 06.10.2008
(51) Int. Cl.: F16K 1/24, F16K 5/18

(54) **Ventil mit einem drehbaren Verschlussglied**

(71) Anmelder: VAT Holding AG, 9469 Haag (CH)
(72) Erfinder: Zvokelj, Peter, A-6973 Höchst (AT)
(74) Vertreter: Kaminski Harmann

(57) **Zusammenfassung**

Die Erfindung betrifft ein Ventil (1) mit einem Ventilgehäuse (2), das im Inneren einen Ventilraum (R) mit einem ersten Anschluss (3), einem.zweiten Anschluss (5) und einem die Mündung des ersten Anschlusses (3) umschliessenden Ventilsitz (7) aufweist. Innerhalb des Ventilraums (R) ist ein Verschlussglied (8) angeordnet, das einen durch das Verschlussglied (8) hindurchführenden Kanal (9) besitzt. Mittels eines Ventilantriebs (12) ist das Verschlussglied (8) von einer offenen Stellung (0), in welcher der Kanal (9) den zweiten Anschluss (5) mit dem ersten Anschluss (3) verbindet, in eine Zwischenstellung (M), in welcher sich ein auf einer geschlossene Dichtfläche (11) des Verschlussglieds (8) angeordneter Dichtkörper (13) in beabstandeter und berührungsfreier Gegenüberlage zum Ventilsitz (7) befindet, um eine Drehachse (10) drehbar und von der Zwischenstellung (M) in eine geschlossene Stellung (C), in welcher der Dichtkörper (13) gasdichtend auf dem Ventilsitz (7) aufliegt, im Wesentlichen senkrecht zum Ventilsitz (7) bewegbar.

## Beschreibung

Die vorliegende Erfindung betrifft ein Ventil zum im Wesentlichen gasdichten Unterbrechen eines Fliesswegs mit einem zwischen einer offenen und einer geschlossenen Stellung drehbaren Verschlussglied. Derartige Ventile werden vor allem in der Vakuumtechnik verwendet und insbesondere als Vakuum-Eckventile oder Vakuum-Inline-Ventile bezeichnet.

Vakuumventile der eingangs genannten Art sind aus dem Stand der Technik in unterschiedlichen Ausführungsformen bekannt. Sie kommen insbesondere im Bereich der IC- und Halbleiterfertigung, die in einer geschützten Atmosphäre möglichst ohne das Vorhandensein verunreinigender Partikel stattfinden muss, zum Einsatz.

Aus dem Stand der Technik ist beispielsweise ein in der US 6,772,989 beschriebenes Vakuum-Eckventil bekannt, das zwei rechtwinklig zueinander angeordneten Anschlüsse, die im Inneren des Ventils von einem Fliessweg verbunden sind, einen im Fliessraum angeordneten Ventilsitz und eine dem Ventilsitz gegenüberliegende Öffnung aufweist. In einem die Öffnung verschliessenden Ventildeckel ist ein Kolben eines pneumatischen Zylindersystems angeordnet, welcher über eine Ventilstange einen Ventilteller, der den Ventilsitz öffnet und schliesst, antreibt. Der Ventildeckel ist durch eine Balgplatte gasdicht an der Öffnung angebracht. Eine Rückstellfeder zwischen dem Ventilteller und dem Ventildeckel wird beim Öffnen des Ventilsitzes zusammengedrückt, so dass das Ventil per Federkraft schliesst. Der Ventildeckel verfügt über einen Anschluss, welcher Pressluft in eine sich balgplattenseitig befindende Druckkammer, die durch den Kolben begrenzt wird, zu- und abführt. Die beiden Enden eines Balgs, der die Ventilstange umgibt, sind gasdicht an der inneren Randfläche der Balgplatte und am Ventilteller befestigt. Der Ventilteller weist an der dem Ventilsitz zugewandten Fläche eine ringförmige Halterungsnut auf, in welcher ein Dichtring angeordnet ist. Im geöffneten Zustand des Ventils ist der Dichtring somit dem Volumenstrom ausgesetzt, was zu einem erhöhten Verschleiss des Dichtrings führt und einen in regelmässigen Abständen zu erfolgenden Austausch des Dichtrings erforderlich macht. Derartige Vakuum-Eckventile sind seit langem aus dem Stand der Technik in unterschiedlichen Ausführungsformen bekannt und kommen in diversen Bereichen zum Einsatz.

Ein gattungsgemässes Vakuum-Eckventil hat in der Regel ein aus Aluminium oder einem Elastomer gefertigtes Ventilgehäuse oder eine Innenbeschichtung aus Aluminium oder einem anderen geeigneten Material, während der Ventilteller und der Balg meist aus Stahl bestehen. Der in seiner Längsachse innerhalb des Bereichs des Verstellwegs des Tellers ausdehnbare und zusammendrückbare Balg dichtet den Fliessraum luftdicht von der Rückstellfeder, der Ventilstange und der Druckkammer ab. Zur Anwendung kommen vor allem zwei Typen von Bälgen. Einerseits der Membranbalg, andererseits der Wellenbalg, welcher letzterer sich gegenüber dem Membranbalg dadurch auszeichnet, dass er keine Schweissnähte aufweist und leichter gereinigt werden kann, jedoch einen geringeren maximalen Hub aufweist.

Vor allem der Balg ist besonders anfällig für Verunreinigungen im Fliessraum, da dessen Oberfläche aufgrund ihrer wellenartigen Struktur verhältnismässig gross ist und eine erhebliche Angriffsfläche für das durch den Fliessraum strömende Gas bildet. Da die Expandierbarkeit eines Balgs begrenzt ist und der Balg selbst im vollkommen zusammengefahrenen Zustand axial relativ viel Platz benötigt, muss sich der Fliessraum des Ventils in einen dem Ventilsitz gegenüberliegenden Abschnitt erstrecken, der wesentlich grösser ist, als zur blossen Verbindung der beiden Anschlüsse erforderlich. Anderenfalls ist es nicht möglich, den Durchgang zum seitlichen Anschluss vollkommen zu öffnen.

Eck- oder Inline-Venile werden regelmässig nicht nur zum Öffnen und Schliessen eines Fliesswegs sondern auch zum Regeln eines Volumenstroms verwendet, indem der Öffnungsquerschnitt präzise eingestellt wird. Aufgrund der Geometrie der Anschlüsse, des Ventilsitzes und des Ventiltellers ist eine Feineinstellung des Öffnungsquerschnittes jedoch nur bedingt möglich und führt zu erheblichen Turbulenzen im Volumenstrom.

Ein weiterer Nachteil des beschriebenen, gattungsgemässen Vakuum-Eckventils besteht in dem verhältnismässig geringen Leitwert des Ventils. Selbst bei vollständig geöffnetem Verschlussteller befindet sich dieser gemeinsam mit dem Balg im Fliessraum und im Querschnitt der beiden Anschlüsse. Der Durchflussquerschnitt des Ventils entspricht selbst bei vollständig geöffnetem Ventil nicht den meist kreisrunden Querschnitten der Anschlüsse. Daher wir zum einen der Leitwert begrenzt, zum anderen kommt es zu erheblichen Verwirbelungen im Volumenstrom.

Die aus dem Stand der Technik bekannten Ventile der eingangs genannten Art haben ausserdem den Nachteil, dass das den Fliessraum des Ventils durchströmende Gas unterschiedlichen Materialen ausgesetzt ist, insbesondere einerseits dem Aluminium des Ventilgehäuses, andererseits dem Stahl des Balgs und des Tellers. Bei zahlreichen Gasen kann es zu einer Reaktion zwischen dem Gas und dem Material des Ventils kommen, so dass es gewünscht wird, möglichst nur ein einziges Material im Fliessraum des Ventils einzusetzen. Bei manchen Prozessen ist die Präsenz von Stahl gänzlich unerwünscht. Somit wird angestrebt, ein Ventil der eingangs genannten Art zur Verfügung zu stellen, in dessen Fliessraum im Wesentlichen ausschliessliche Aluminium oder ein anderes für den jeweiligen Prozess geeignetes Material zum Einsatz kommt. Insbesondere Aluminium eignet sich jedoch kaum zur Herstellung eines weit expandierbaren Balgs.

Ausserdem ist nachteilig, dass zur Erzielung eines besseren Leitwerts und Erhöhung des Öffnungsquerschnittes der oben beschriebene Aufbau des Ventilmechanismus eine relativ langgestreckte Bauweise des Ventils zur Folge hat.

Aufgabe der Erfindung ist es daher, die oben beschriebenen Probleme zu lösen und ein strömungsoptimiertes, präzise einstellbares, nur wenig verschmutzendes, einem geringeren Verschleiss insbesondere der Dichtung unterworfenes, leicht reinigbares, mit einem prozessneutralen Fliessraum ausbildbares Ventil der eingangs genannten Art zur Verfügung zu stellen und somit den bisher noch nicht hinreichend gelösten Zielkonflikt zu lösen. Eine weitere Aufgabe besteht darin, das Ventil möglichst kompakt mittels einer reduzierten Anzahl an Bauteilen auszubilden.

Diese Aufgabe wird durch die Verwirklichung der Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe Ventil zum im Wesentlichen gasdichten Unterbrechen eines Fliesswegs besitzt ein Ventilgehäuse mit einem im Inneren ausgebildeten Ventilraum, der von dem Ventilgehäuses gasdicht umschlossen wird, und mindestens zwei Anschlüssen, die in den Ventilraum führen und somit zwei Öffnungen des Ventilraums bilden. Ein in den Ventilraum mündender erster Anschluss erstreckt sich in Richtung einer ersten Achse und ein ebenfalls in den Ventilraum mündender zweiter Anschluss erstreckt sich in Richtung einer zweiten Achse. Die Achsen der Anschlüsse werden beispielsweise durch deren Längsverlauf, den Verlauf eines angeordneten Stutzens oder durch die Mündungsflächen in den Fliessraum definiert. Die Anschlüsse haben beispielsweise einen kreisförmigen Querschnitt.

Im Ventilraum ist ein Ventilsitz ausgeformt, der die Mündung des ersten Anschluss in den Ventilraum umschliesst. Der Ventilsitz weist in das Ventilinnere. Der Ventilsitz ist insbesondere als ringförmige glatte Fläche, die sich rings um die Mündung des ersten Anschlusses im Ventilraum erstreckt, ausgebildet. Der Ventilsitz kann sich geometrisch auf einer Ebene, einer gewölbten, insbesondere konkaven Fläche, beispielsweise einem inneren Zylindermantelabschnitt, oder einer sonstigen Fläche erstrecken.

Innerhalb des Ventilraums ist ein relativ zum Ventilgehäuse bewegbares Verschlussglied angeordnet, das von dem Ventilgehäuse umschlossen wird. Durch das Verschlussglied hindurch führt ein Kanal, der von dem Verschlussglied umschlossen ist. Der Kanal kann beispielsweise einen gekrümmten, beispielsweise rechtwinklig abknickenden Verlauf oder einen geraden Verlauf, insbesondere in Form einer geraden Bohrung durch das Verschliessglied, abhängig von der Anordnung der beiden Anschlüsse und deren Mündungen in den Ventilraum, haben.

In einer Ausführungsform der Erfindung verläuft die erste Achse des ersten Anschlusses senkrecht zu der zweiten Achse des zweiten Anschlusses und der Kanal hat einen rechtwinklig abknickenden Verlauf. Das Ventil ist als Eckventil ausgebildet.

In einer anderen Ausführungsform entspricht die erste Achse des ersten Anschlusses der zweiten Achse des zweiten Anschlusses, der Kanal hat einen geraden Verlauf und das Ventil ist als Inlineventil ausgebildet.

Das Verschlussglied ist insbesondere aus Aluminium oder einem sonstigen geeigneten Material herstellbar, so dass es möglich ist, im Ventilraum nur ein einziges Material zu verwenden. Somit sinkt die Gefahr ungewollter Reaktionen zwischen einem Ventilbauteil und dem Medium, insbesondere dem das Ventil durchströmende Gas.

Ausserdem besitzt das Verschlussglied auf seiner Aussenfläche eine geschlossene Dichtfläche, die als Verschluss für die erste Öffnung ausgebildet ist. Auf dieser geschlossenen Dichtfläche ist ein mit dem Ventilsitz korrespondierender Dichtkörper angeordnet. In anderen Worten sind die Dichtfläche und der Dichtkörper derart ausgebildet, dass der Dichtkörper in gasdichten, die Mündung des ersten Anschlusses umschliessenden Kontakt mit dem Ventilsitz gebracht werden kann, so dass der erste Anschluss von der Dichtfläche verschlossen wird und der Ventilraum somit vom ersten Anschluss gasdicht trennbar ist. Der Dichtkörper ist beispielsweise als eine auf die geschlossene Dichtfläche aufvulkanisierte elastische Dichtung ausgebildet.

Das Ventil besitzt einen Ventilantrieb, der mit dem Verschlussglied gekoppelt ist. Mittels des Ventilantriebs ist das Verschlussglied um eine Drehachse drehbar und in eine nicht zur Drehachse parallele Richtung, die eine sich senkrecht zur Drehachse erstreckende Richtungskomponente besitzt, im Wesentlichen senkrecht zum Ventilsitz bewegbar. Das Verschlussglied kann mittels des Ventilantriebs in drei typische Stellungen, nämlich in eine offene Stellung, in eine Zwischenstellung und eine geschlossene Stellung gebrachten werden. Ebenfalls ist es in einer Weiterbildung der Erfindung möglich, das Verschlussglied in beliebige, zwischen diesen drei Stellungen liegende Stellungen zu bringen.

In der offenen Stellung des Verschlussglieds verbindet der Kanal den zweiten Anschluss mit dem ersten Anschluss, und umgekehrt, und gibt den Fliessweg zwischen dem ersten Anschluss und dem zweiten Anschluss frei. In anderen Worten ist das Verschlussglied in der offenen Stellung derart positioniert, dass das eine Ende des Kanals zur ersten Öffnung und das andere Ende des Kanals zur zweiten Öffnung weist, so dass ein Medium, insbesondere ein Gas, von dem ersten Anschluss zum zweiten Anschluss, und umgekehrt, durch den Kanal hindurch strömen kann. Vorzugsweise hat der Kanal einen beispielsweise kreisförmigen Querschnitt, der den Querschnitten der beiden Anschlüsse im Wesentlichen entspricht, so dass der Leitwert des Ventils in der offenen Stellung möglichst gross ist und der Volumenstrom ungehindert durch das Ventil hindurchströmen kann.

Mittels des Ventilantriebs ist das Verschlussglied um eine Drehachse von der offenen Stellung in eine Zwischenstellung drehbar. Diese Drehachse verläuft beispielsweise parallel zum Ventilsitz oder besitzt eine Richtungskomponente parallel zum Ventilsitz. In der Zwischenstellung befindet sich der Dichtkörper in beabstandeter und berührungsfreier - insbesondere im Wesentlichen paralleler - Gegenüberlage zum Ventilsitz. In anderen Worten weist in der Zwischenstellung mindestens eines der Enden des Kanals in eine Richtung, die nicht zur Mündung des ersten Anschlusses weist, so dass ein freies und ungehindertes Durchströmen des Kanals zwischen dem ersten und dem zweiten Anschluss nicht mehr möglich ist. Aufgrund der beabstandeten, berührungsfreien Gegenüberlage des Dichtkörpers zum Ventilsitz ist die Mündung des ersten Anschlusses jedoch nach wie vor nicht vollkommen gasdicht verschlossen. Durch den Spalt zwischen der Dichtfläche bzw. dem Dichtkörper und dem Ventilsitz kann noch Gas vom ersten zum zweiten Anschluss und umgekehrt strömen. Die Drehachse und die Ausgestaltung des Verschlussglieds und des Ventilgehäuses ist derart, dass es bei der Drehung von der offenen Stellung in die Zwischenstellung zu keinem Kontakt des Dichtkörpers mit dem Ventilgehäuse oder dem Ventilsitz kommt und dieser somit keiner verschleissfördernden Reibung oder Scherung ausgesetzt ist.

Ebenfalls mittels des Ventilantriebs ist das Verschlussglied von der Zwischenstellung, in die geschlossene Stellung bewegbar, indem das Verschlussglied von der Zwischenstellung, in welcher sich der Dichtkörper in beabstandeter und berührungsfreier Gegenüberlage zum Ventilsitz befindet, in die geschlossenen Stellung, in welcher die geschlossene Dichtfläche des Verschlussglieds auf dem Ventilsitz gasdichtend aufliegt und senkrecht auf den Ventilsitz gedrückt ist, im Wesentlichen senkrecht zum Ventilsitz bewegt wird. In anderen Worten ist der Ventilantrieb derart ausgestaltet, dass der Abstand zwischen dem Verschlussglied und dem Ventilsitz derart reduziert wird, dass der Dichtkörper in im Wesentlichen senkrechter Richtung auf dem Ventilsitz zum Liegen kommt und senkrecht auf diesen gedrückt wird, so dass die Gasdichtigkeit gewährleistet ist. Die geschlossene Dichtfläche des Verschlussgliedes legt sich somit über die Mündung des ersten Anschlusses und dichtet diesen gasdicht ab, indem der Dichtkörper des Verschlussgliedes auf den Ventilsitz, der die Mündung des ersten Anschlusses umschliesst, gedrückt wird. Da der erste Anschluss in dieser Stellung des Verschlussgliedes von dem Ventilraum gasdicht getrennt ist, kann kein Gas mehr vom ersten zum zweiten Anschluss, und umgekehrt, strömen und der durch das Ventil führende Fliessweg ist gasdicht unterbrochen.

Da das Verschlussglied mit dessen Dichtkörper im Wesentlichen senkrecht zum Ventilsitz bewegt wird und somit in im Wesentlichen senkrechter Richtung auf den Ventilsitz gedrückt wird, wird der Dichtkörper nur geringen Scherkräften ausgesetzt. Diese hat mehrere erhebliche Vorteile. Zum einen unterliegt der Dichtkörper einer geringen Belastung und einem geringen Verschleiss. Aus diesem Grunde können elastische und hochdichtende Dichtstoffe zum Einsatz kommen, selbst wenn diese nur geringen mechanischen Belastungen unterworfen werden dürfen. Zum anderen wird die durch Reibung entstehende Anzahl an Partikel gering gehalten, so dass das erfindungsgemässe Ventil für hochsensible Vakuumanwendungen insbesondere im Bereich der Halbleiterindustrie eingesetzt werden kann.

Ein weiterer Vorteil des erfindungsgemässen Ventils besteht darin, dass der Dichtkörper in geöffneten Stellung des Verschlussglieds nicht dem Medienstrom ausgesetzt ist, da das Medium das Ventil im Wesentlichen durch den Kanal durchströmt. Der Dichtkörper unterliegt somit auch im geöffneten Zustand einem geringen Verschleiss.

Die mittels des Ventilantriebs bewirkte Bewegung von der Zwischenstellung in die geschlossene Stellung in im Wesentlichen senkrechter Richtung auf den Ventilsitz kann entweder einen tatsächlich linear Bewegung, die geradlinig auf den Ventilsitz erfolgt, oder eine Schwenkbewegung mit einem weit von dem Ventilsitz entfernten Drehpunkt, so dass die Bewegung quasi linear ist, oder eine sonstige im Wesentlichen geradlinige Bewegung sein.

Die Kombination einer Drehbewegung mit einer im Wesentlichen linearen Bewegung durch den Ventilantrieb kann entweder mittels eines einzigen Antriebselements, beispielsweise einem Elektromotor und einer Kulissensteuerung, welche die Drehbewegung ab Erreichen der Zwischenstellung in eine geradlinige Bewegung in Richtung des Ventilsitzes umwandelt, oder mittels mehrerer Antriebselemente erfolgen. Beispielsweise ist es möglich, einen Drehantrieb zur Erzeugung der Drehung zwischen der geöffneten Stellung und der Zwischenstellung und einen Linearantrieb zur Erzeugung der Bewegung von der Zwischenstellung in die geschlossene Stellung zu verwenden. Unter einem Ventilantrieb ist daher auch die Kombination mehrere Antriebselemente, beispielsweise von Elektro-, Pneumatik- und/oder Hydraulikantriebe, zu verstehen.

Das erfindungsgemässe Ventil wird nachfolgend anhand von in den Zeichnungen schematisch dargestellten konkreten Ausführungsbeispielen rein beispielhaft näher beschrieben. Im Einzelnen zeigen:
- Fig. 1a: eine Querschnittsseitenansicht auf eine erste Ausführungsform der Erfindung in Form eines Eckventils in der offenen Stellung;
- Fig. 1b: eine Querschnittsdraufsicht auf das Eckventil in der offenen Stellung;
- Fig. 2a: eine Querschnittsseitenansicht auf das Eckventils in der Zwischenstellung;
- Fig. 2b: eine Querschnittsdraufsicht auf das Eckventil in der Zwischenstellung;
- Fig. 3a: eine Querschnittsseitenansicht auf das Eckventils in der geschlossenen Stellung;
- Fig. 3b: eine Querschnittsdraufsicht auf das Eckventil in der geschlossenen Stellung;
- Fig. 4: eine Schrägansicht auf das Eckventils in der offenen Stellung;
- Fig. 5a: eine Querschnittsseitenansicht auf eine zweite Ausführungsform der Erfindung in Form eines Inlineventils in der offenen Stellung; und
- Fig. 5b: eine Querschnittsdraufsicht auf das Inlineventil in der offenen Stellung.

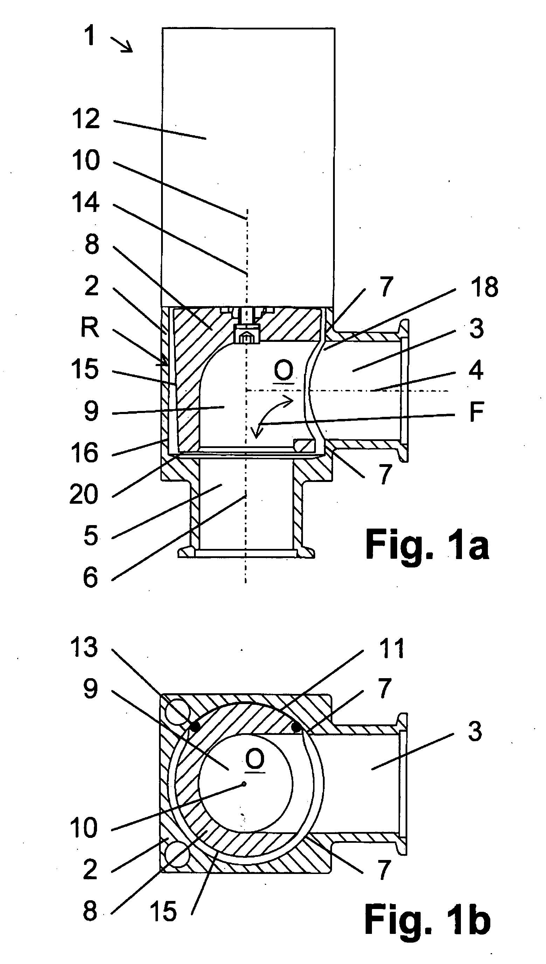

Die Figuren 1a bis 4 zeigen eine erste Ausführungsform der Erfindung in Form eines Eckventils in unterschiedlichen Ansichten bzw. Zuständen. Da jeweils das gleiche Ventil gezeigt ist, werden die Figuren im Folgenden zum Teil gemeinsam beschrieben, wobei auf bereits erläuterte Merkmale und Bezugszeichen vereinzelt nicht nochmals eingegangen wird. In den Figuren 1a, 2a und 3a wird das Eckventil jeweils in einer Querschnittsseitenansicht gezeigt, wohingegen die Figuren 1b, 2b und 3b jeweils entsprechende Querschnittsdraufsichten zeigen.

Das als Eckventil 1 ausgebildete Ventil aus den Figuren 1a bis 4 dient zum im Wesentlichen gasdichten Unterbrechen eines Fliesswegs F, der mittels eines Pfeils in Figur 1a veranschaulicht ist. Das Eckventil 1 hat ein Ventilgehäuse 2, in dessen Inneren einen Ventilraum R von dem Ventilgehäuse 2 gasdicht umschlossen wird. Der Ventilraum R hat eine im Wesentlichen zylindrische Form. In den Ventilraum R münden ein erster Anschluss 3 in Richtung einer ersten Achse 4 und ein zweiter Anschluss 5 in Richtung einer zweiten Achse 6. Die beiden Anschlüssen 3 und 5 stellen somit zwei Öffnungen des Ventilraum R dar, die zum dem Ventiläusseren führen. Die erste Achse 4 des ersten Anschlusses 3 verläuft senkrecht zu der zweiten Achse 6 des zweiten Anschlusses 5. Aufgrund dieser Anordnung der Anschlüsse 3 und 5 wird das Ventil als Eckventil 1 bezeichnet. An diesen Anschlüssen 3 und 5 ist beispielsweise eine Rohrleitung, die zu einer Vakuumpumpe oder einer Vakuumkammer führt, anschliessbar. Der Fliessweg R führt vom ersten Anschluss 3 zum zweiten Anschluss 5, und umgekehrt. In dem Ventilraum R ist ein Ventilsitz 7 ausgeformt, welcher die Mündung 18 des ersten Anschlusses 3 umschliesst. Unter dem Ventilsitz 7 ist allgemein eine glatte Kontaktfläche zu verstehen, auf welcher ein Dichtkörper derart aufgedrückt werden kann, dass der Dichtkörper in gasdichten Kontakt mit dem Ventilsitz 7 gerät. Im gezeigten Ausführungsbeispiel ist der Ventilsitz 7 eine ringförmige, in den Ventilraum R weisende glatte Fläche rings um die Mündung 18. Die Mündung 18 des ersten Anschlusses 3 und der Ventilsitz 7 sind in der seitlichen inneren Zylindermantelfläche 16 des zylindrischen Ventilraum R angeordnet.

An dem Ventilgehäuse 2 ist ein Ventilantrieb 12 montiert. Innerhalb des Ventilraums R ist ein Verschlussglied 8 angeordnet, das eine im Wesentlichen zylindrische Form mit einer Zylinderachse 14 aufweist. Durch das Verschlussglied 8 hindurch führt ein rechtwinklig abknickender Kanal 9, dessen erstens Ende auf der seitlichen Zylindermantelfläche 15 des zylindrischen Verschlussglieds 8 und dessen zweites Ende auf der unteren, weg vom Ventilantrieb 12 weisenden Stirnfläche 20 des zylindrischen Verschlussglieds 8 endet. Ein Abschnitt der seitlichen Zylindermantelfläche 15 des zylindrischen Verschlussglieds 8 bildet eine geschlossene Dichtfläche 11, auf welcher ein Dichtkörper 13 in Form einer aufvulkanisierten elastischen Dichtung, insbesondere einem Dichtring, angeordnet ist. Die Form des Ventilsitzes 7 und die Form der Dichtfläche 11 mit ihrem Dichtkörper 13 korrespondieren derart zueinander, dass die geschlossene Dichtfläche 11 des Verschlussglieds 8 auf dem Ventilsitz 7 gasdichtend aufliegen kann, indem der Dichtkörper 13 in gasdichten Kontakt mit dem Ventilsitz 7 gebracht ist, so dass die Mündung 18 des ersten Anschlusses 3 gasdicht verschlossen werden kann.

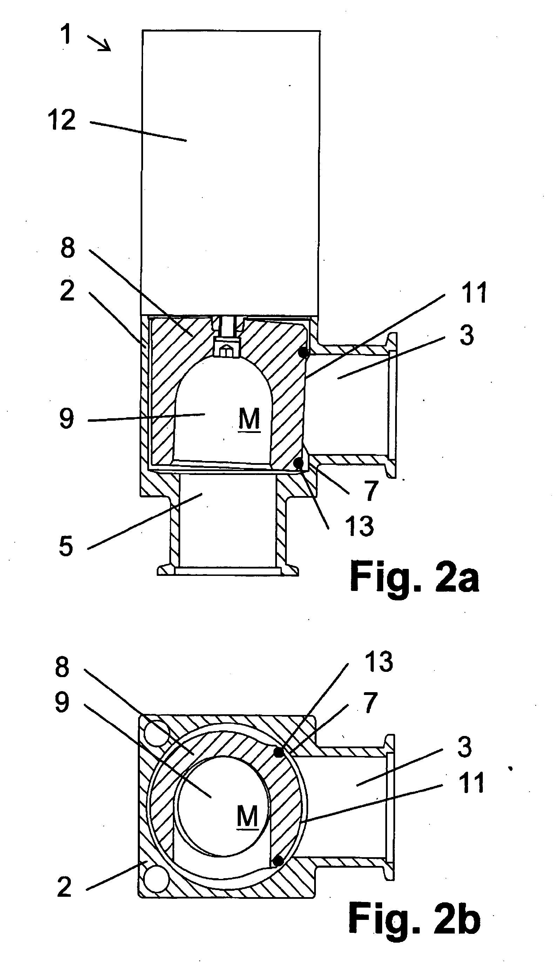

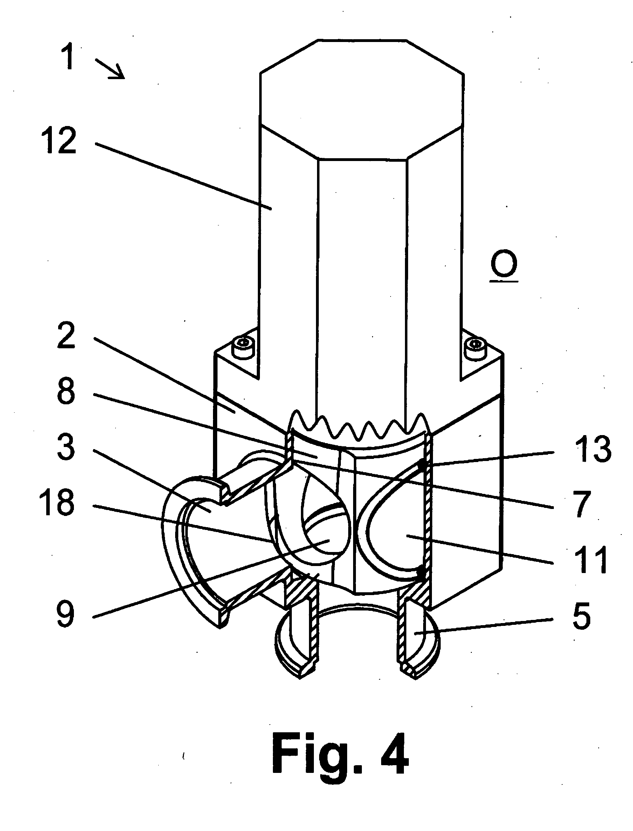

Mittels des Ventilantriebs 12 ist das Verschlussglied 8 um eine Drehachse 10, die im Wesentlichen der Zylinderachse 14 des Verschlussglieds 8 entspricht, zwischen einer offenen Stellung 0, gezeigt in Figur 1a, 1b und 4, und einer Zwischenstellung M, gezeigt in den Figuren 2a und 2b, drehbar.

In der offenen Stellung O, wie in den Figuren 1a, 1b und 4 gezeigt, verbindet der Kanal 9 den zweiten Anschluss 5 mit dem ersten Anschluss 3, und umgekehrt, und der Fliessweg F zwischen dem ersten Anschluss 3 und dem zweiten Anschluss 5 ist freigegeben. In anderen Worten weist das eine Ende des Kanals 9 auf den ersten Anschluss 3 und das andere Ende des Kanals 9 auf den zweiten Anschluss 5, so dass eine Medium, beispielsweise ein Gas, vom zweiten Anschluss 5 zum ersten Anschluss 3 strömen kann, und umgekehrt. Die Dichtfläche 11 mit ihrem Dichtkörper 13 weist in der offenen Stellung auf die seitliche innere Zylindermantelfläche 16 des zylindrischen Ventilraums R und ist dem Strom zwischen dem ersten Anschluss 3 und dem zweiten Anschluss 5 nicht ausgesetzt, wie aus Figur 1b ersichtlich. Somit unterliegt der Dichtkörper 13 keinem durch den Volumenstrom entstehenden Verschleiss.

In der Zwischenstellung M, die durch eine Drehung des Verschlussglieds 8 um die Drehachse 10 um etwa 90° erreicht wird, befinden sich die Dichtfläche 11 und der Dichtkörper 13 in beabstandeter und berührungsfreier Gegenüberlage zum Ventilsitz 7, wie in den Figuren 2a und 2b gezeigt. Die Dichtfläche 11 ist über die Mündung 18 des ersten Anschlusses 3 geschoben. Da der Dichtkörper 13 den Ventilsitz 7 noch nicht berührt, kann noch Gas zwischen dem ersten Anschluss 3 und dem zweiten Anschluss 5 strömen, das Ventil 1 ist also noch nicht gasdicht verschlossen. Der Abstand zwischen dem Dichtkörper 13 und dem Ventilsitz 7 wird dadurch erreicht, dass das Verschlussglied 8 um eine weit von dem Verschlussglied 8 entfernte, senkrecht zur Drehachse 10 und zu der von der ersten Achse 4 und der zweiten Achse 6 aufgespannten Ebene verlaufende Schwenkachse vom Ventilsitz 7 weggeschwenkt ist, wie in Figur 2a erkennbar. Somit liegt der Dichtkörper 13 zwar nicht genau parallel zum Ventilsitz 7, er ist jedoch aufgrund des relativ grossen Abstands der Schwenkachse im Wesentlichen parallel.

Während des Übergangs von der offenen Stellung O in die Zwischenstellung M ist eine hochpräzise Einstellung des Öffnungsquerschnitts des Ventils 1 möglich, da der in der offenen Stellung O kreisrunde Öffnungsquerschnitt beim Übergang in die Zwischenstellung M kontinuierlich katzenaugenartig kleiner wird.

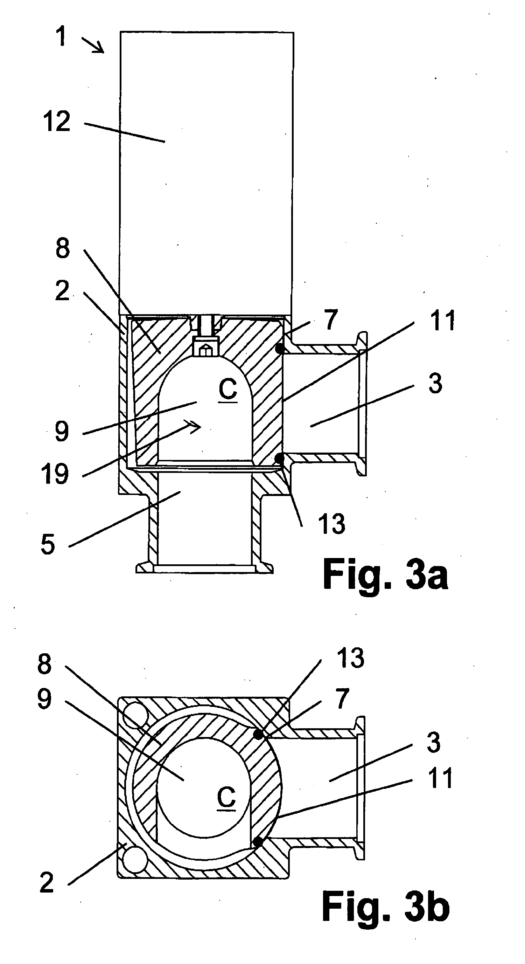

Zum vollständigen Schliessen des Ventils 1 sind der Ventilantrieb 12 und das Verschlussglied 8 derart ausgebildet, dass der Abstand zwischen dem Verschlussglied 8 und dem Ventilsitz 7 in im Wesentlichen senkrechter Rechtung zum Ventilsitz 7 reduziert wird, in dem das Verschlussglied 8 von der Zwischenstellung M, Figuren 2a und 2b, auf den Ventilsitz 7 um die weit entfernte Schwenkachse mittels einer Schwenkbewegung 19 geschwenkt wird, bis es zu einem gasdichten Kontakt zwischen dem Dichtkörper 13 und dem Ventilsitz 7 kommt und des Verschlussglied 8 die geschlossenen Stellung C, wie in den Figuren 3a und 3b gezeigt, einnimmt. Die Schwenkbewegung 19 ist in Figur 3a mittels des Pfeils dargestellt. Wesentlich ist hierbei, dass der Dichtkörper 13 in senkrechter Richtung auf dem Ventilsitz 7 zum Liegen kommt und aufgedrückt wird, ohne dass es hierbei zu erheblichen Scherkräften kommt.

Unwesentlich ist hingegen, ob der Bewegungsverlauf von der Zwischenstellung M und der geschlossenen Stellung C stets linear und senkrecht zum Ventilsitz 7 ist, was im gezeigten Ausführungsbeispiel aufgrund der Schwenkbewegung 19 nicht der Fall ist. Entscheidend ist das senkrechte Aufsetzen des Dichtkörpers 13 auf dem Ventilsitz 7, denn dieses verhindert einen erhöhten Verschleiiss des Dichtkörpers 13. Daher ist unter dem Begriff "im Wesentlichen senkrecht" das senkrechte Aufsetzen und das senkrechte Aufdrücken des Dichtkörpers 13 auf dem Ventilsitz 7 zu verstehen.

Beim Übergang von der Zwischenstellung M in die geschlossene Stellung C ist ein sehr feines Regeln des bereits sehr geringen Öffnungsquerschnitts des Ventils 1 möglich.

In der geschlossenen Stellung C, Figuren 3a und 3b, in welcher der Dichtkörper 13 der geschlossenen Dichtfläche 11 des Verschlussglieds 8 auf dem Ventilsitz 7 gasdichtend aufliegt, unterbricht das Verschlussglied 8 den Fliessweg F auf gasdichte Weise. Die beiden Anschlüsse 3 und 5 sind also gasdicht getrennt und das Ventil 1 ist gasdicht geschlossen.

Das teilweise und vollständige Öffnen erfolgt in umgekehrter Weise.

Der Ventilantrieb 12 ist im gezeigten Ausführungsbeispiel als Kulissenantrieb ausgebildet, bei welchem die Drehbewegung um die Drehachse 10 ab Erreichen der Zwischenstellung M in eine Schwenkbewegung 19 zum Erreichen der geschlossenen Stellung C umgewandelt wird. Anstelle eines solchen Antriebs können jedoch auch beliebige andere Antriebe eingesetzt werden, die eine derartige Bewegungskombination ermöglichen, beispielsweise eine Kombination aus Drehantrieb und Linearantrieb.

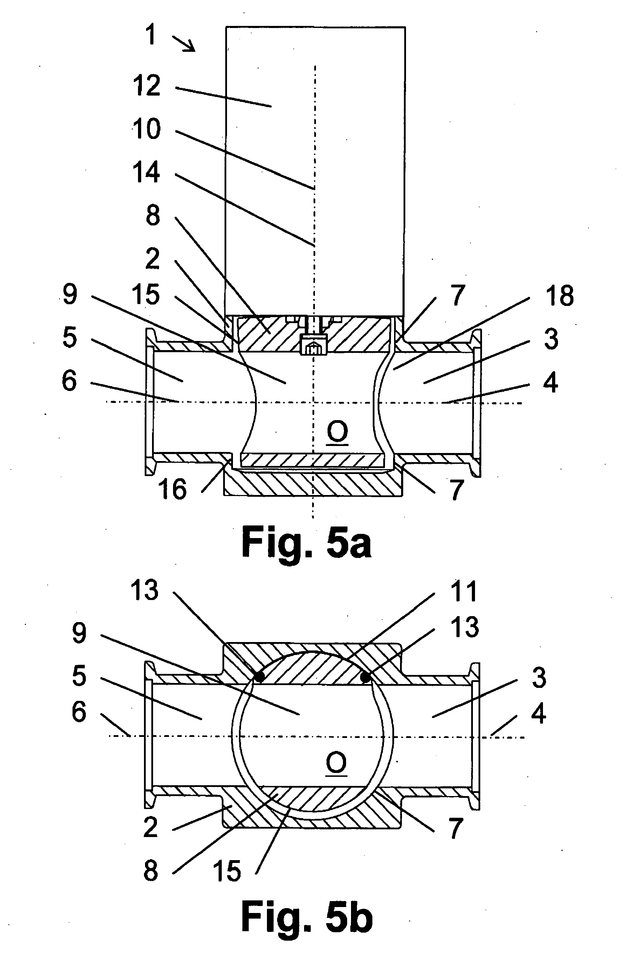

In den Figuren 5a und 5b ist eine alternative Ausführungsform der Erfindung in Form eines Inline-Ventils 1a in der offenen Stellung O dargestellt. Da dieses Ventil bis auf die Anordnung der Anschlüsse und den Verlauf des Kanals dem ersten Ausführungsbeispiel aus den Figuren 1a bis 4 entspricht, wird im Folgenden nur auf die Unterschiede eingegangen.

In dem Ventilgehäuse 2 sind der erste Anschluss 3 und der zweite Anschluss 5 entlang einer gemeinsamen Achse angeordnet. In anderen Worten entspricht die erste Achse 4 des ersten Anschlusses 3 der zweiten Achse 6 des zweiten Anschlusses 5. Das Verschlussglied 8 hat ebenfalls eine im Wesentlichen zylindrische Form und die Zylinderachse 14 des zylindrischen Verschlussglied 8 entspricht im Wesentlichen der Drehachse 10. Die geschlossene Dichtfläche 11 wird ebenfalls von einem Abschnitt der seitlichen Zylindermantelfläche 15 des zylindrischen Verschlussglieds 8 gebildet. Der durch das Verschlussglied 8 verlaufende Kanal 9 hat hingegen einen geraden Verlauf entlang der aufeinander liegenden ersten Achse 4 und der zweiten Achse 6. In anderen Worten führt der Kanal 9 von einer Seite der seitlichen Zylindermantelfläche 15 des zylindrischen Verschlussglieds 8 zur gegenüberliegenden anderen Seite.

Das Schliessen des Inline-Ventils 1b erfolgt, wie auch im Falle des Eckventils 1 aus den Figuren 1a bis 4, durch Drehen der Verschlussglieds 8 um die Drehachse 10 in die Zwischenstellung M und Bewegen des Verschlussglieds 8 im Wesentlichen senkrecht zum Ventilsitz 7, bis der Dichtkörper 13 gasdichtend auf dem Ventilsitz 7 aufliegt und senkrecht auf den Ventilsitz gedrückt ist.

Anstelle einer eckigen Anordnung der Anschlüsse 3 und 5, wie in den Figuren 1a bis 4 gezeigt, oder einer geraden Anordnung entlang einer gemeinsamen Achse, wie in den Figuren 5a und 5b gezeigt, ist es ebenfalls möglich, die Anschlüsse 3 und 5 auf eine andere Weise anzuordnen. Ausserdem ist es gemäss der Erfindung möglich, das Ausführungsbeispiel der Figuren 1a bis 4 mit dem der Figuren 4a und 4b zu kombinieren und ein Ventil mit drei oder mehr Anschlüssen zur Verfügung zu stellen.

## Patentansprüche

1. Ventil (1) zum im Wesentlichen gasdichten Unterbrechen eines Fliesswegs (F), mit
• einem Ventilgehäuse (2), das
□ im Inneren einen Ventilraum (R),
□ einen in den Ventilraum (R) mündenden ersten Anschluss (3) in Richtung einer ersten Achse (4),
□ einen in den Ventilraum (R) mündenden zweiten Anschluss (5) in Richtung einer zweiten Achse (6) und
□ einen im Ventilraum (R) angeordneten Ventilsitz (7), welcher die Mündung (18) des ersten Anschluss (3) umschliesst, aufweist,
• einem Ventilantrieb (12) und
• einem Verschlussglied (8),
□ das innerhalb des Ventilraums (R) angeordnet ist,
□ das einen durch das Verschlussglied (8) hindurchführenden Kanal (9) besitzt und
□ das mittels des Ventilantriebs (12) um eine Drehachse (10) zwischen
• einer offenen Stellung (O), in welcher der Kanal (9) den zweiten Anschluss (5) mit dem ersten Anschluss (3) verbindet und den Fliessweg (F) zwischen dem ersten Anschluss (3) und dem zweiten Anschluss (5) freigibt, und
• einer geschlossenen Stellung (C), in welcher eine geschlossene Dichtfläche (11) des Verschlussglieds (8) auf dem Ventilsitz (7) gasdichtend aufliegt, wobei das Verschlussglied (8) den Fliessweg (F) gasdicht unterbricht, drehbar ist,
wobei
• auf der geschlossene Dichtfläche (11) ein mit dem Ventilsitz (7) korrespondierender Dichtkörper (13) angeordnet ist und
• der Ventilantrieb (12) und das Verschlussglied (8) derart ausgebildet sind, dass das Verschlussglied (8) mittels des Ventilantriebs (12)
□ von der offenen Stellung (O) in eine Zwischenstellung (M), in welcher sich der Dichtkörper (13) in beabstandeter und berührungsfreier Gegenüberlage zum Ventilsitz (7) befindet, um die Drehachse (10) drehbar ist und
□ von der Zwischenstellung (M) in die geschlossene Stellung (C), in welcher der Dichtkörper (13) gasdichtend auf dem Ventilsitz (7) aufliegt und senkrecht auf den Ventilsitz (7) gedrückt ist, im Wesentlichen senkrecht zum Ventilsitz (7)
bewegbar ist.

2. Ventil (1) nach Anspruch 1, wobei
• das Verschlussglied (8) eine im Wesentlichen zylindrische Form aufweist,
• die Zylinderachse (14) des zylindrischen Verschlussglied (8) im Wesentlichen der Drehachse (10) entspricht und
• die geschlossene Dichtfläche (11) von einem Abschnitt der seitlichen Zylindermantelfläche (15) des zylindrischen Verschlussglieds (8) gebildet wird.

3. Ventil (1) nach Anspruch 2, wobei
• der Ventilraum (R) im Wesentlichen eine zylindrische Form aufweist,
• die Mündung (18) des ersten Anschlusses (3) und der Ventilsitz (7) in der seitlichen Zylindermantelfläche (16) des zylindrischen Ventilraum (R) angeordnet sind und
• die Form des Ventilsitzes (7) mit der Form der Dichtfläche (11) korrespondiert.

4. Ventil (1) nach einem der Ansprüche 1 bis 3, wobei
• die erste Achse (4) des ersten Anschlusses (3) senkrecht zu der zweiten Achse (6) des zweiten Anschlusses (5) verläuft,
• der Kanal (9) einen rechtwinklig abknickenden Verlauf hat und
• das Ventil als Eckventil (1) ausgebildet ist.

5. Ventil (1) nach einem der Ansprüche 1 bis 3, wobei
• die erste Achse (4) des ersten Anschlusses (3) der zweiten Achse (6) des zweiten Anschlusses (5) entspricht,
• der Kanal (9) einen geraden Verlauf hat und
• das Ventil als Inlineventil (1b) ausgebildet ist.

6. Ventil (1) nach einem der Ansprüche 1 bis 5, wobei
der Ventilantrieb (12) derart ausgebildet ist, dass das Verschlussglied (8) mittels des Ventilantriebs (12) von
der Zwischenstellung (M) in die geschlossene Stellung (C) im Wesentlichen senkrecht zum Ventilsitz (7) mittels einer Schwenkbewegung (19) bewegbar ist.

7. Ventil (1) nach einem der Ansprüche 1 bis 5, wobei
der Ventilantrieb (12) derart ausgebildet ist, dass das Verschlussglied (8) mittels des Ventilantriebs (12) von
der Zwischenstellung (M) in die geschlossene Stellung (C) senkrecht zum Ventilsitz (7) mittels einer geradlinigen Bewegung linear bewegbar ist.

8. Ventil (1) nach einem der Ansprüche 1 bis 7, wobei
der Dichtkörper als eine auf die geschlossene Dichtfläche (11) aufvulkanisierte elastische Dichtung (13) ausgebildet ist.

9. Ventil (1) nach einem der Ansprüche 1 bis 8, wobei
der Querschnitt des Kanals (9) kreisförmig ist.
